# EUROPEAN PATENT SPECIFICATION

(11) **EP 1 448 333 B1**
(45) Date of publication and mention of the grant of the patent: **11.04.2007**
(21) Application number: 02786326.5
(22) Date of filing: 14.11.2002
(51) Int. Cl.: B23D 45/16

(54) **ELECTRICAL WORKING MACHINE**
ELEKTRISCHE ARBEITSMASCHINE
MACHINE ELECTRIQUE

(30) Priority: 28.11.2001 SE 0103964
(43) Date of publication of application: 25.08.2004
(73) Proprietor: Husqvarna AB, 561 82 Huskvarna (SE)
(72) Inventor: DONNERDAL, Ove, S-433 70 SÄVEDALEN (SE)
(74) Representative: Johansson, Lars-Erik
(86) International application number: PCT/SE2002/002071
(87) International publication number: WO 2003/057395

(56) References cited:
- EP-A1- 0 761 398
- EP-A2- 0 878 273
- EP-A2- 0 923 096
- DE-A1- 3 240 080
- DE-A1- 19 707 215
- DE-U1- 9 421 744
- US-A- 4 574 226
- US-A- 4 578 863
- US-A- 5 681 214
- US-A- 6 094 025

## Description

### TECHNICAL FIELD

The invention relates to an electric working machine comprising a motor housing accommodating an electric motor, a working tool provided to be rotated by the electric motor, an electric switch for the motor, a rear unit which is connected to the motor housing and comprises a rear, elongated handle, and a switch lever which is accessible under the lower side of the rear handle. The invention concerns a high power electric cutting machine (see for example US-A-5681214).

### BACKGROUND OF THE INVENTION

An electric cutting machine of the above mentioned type is manufactured and marketed under the trade name Partner® K2300 EL by a company, which is related to the applicant. It is a typical feature of that machine that the motor housing has a very slender, straight design and also that the rear unit has almost straight, horizontal upper and lower sides. The switch housing with the electric switch is in its entirety located in the rear handle, above a switch lever for the electric switch. The switch housing of a high power machine, as in the present case, consists of a body which takes up quite a lot of space. Therefore the rear handle has a correspondingly bulky design in order to be able to accommodate the switch housing. It is therefore uncomfortable for the operator to grip the handle, which is an ergonomic inconvenience. Because of the geometric conditions, the switch lever is rather short and the return spring, which must be compressed by the operator when the electric switch is switched on and as long as the motor is running, must be comparatively strong. This is tiring, which also is an ergonomic inconvenience.

The known machine also comprises a blocking button for the electric switch, which button has to be inactivated before the electric switch can be switched on. The blocking button is placed in front of the short switch lever on the known machine, at a level under the switch lever, which is not an ideal location, because it does not promote an easy operation.

### BRIEF DESCRIPTION OF THE INVENTION

In view of the above background, it is a purpose of the invention to provide an electric working machine and particularly an electric cutting machine, which is advantageous from an ergonomic point of view as compared to known working machines of the type which is mentioned in the above preamble. This can be achieved by an electric working machine according to claim 1. Further characteristic features, aspects and advantages of the invention will be apparent from the following description of a preferred embodiment.

### BRIEF DESCRIPTION OF THE DRAWINGS

In the following description of a preferred embodiment of the invention, reference will be made to the accompanying drawings, in which
Fig. 1 is a side elevation of an electric cutting machine according to the invention,
Fig. 2 shows the interior of a left hand half of a rear unit included in the cutting machine according to Fig. 1 and the functional elements which are provided in the rear unit, and
Fig. 3 shows a section of the rear handle and related members along the line III-III in Fig. 1.

### DESCRIPTION OF PREFERRED EMBODIMENT

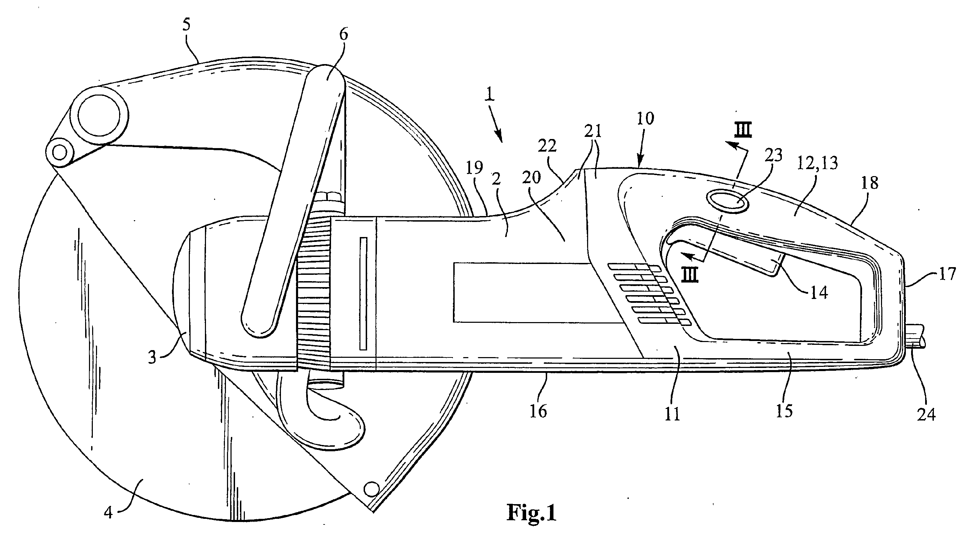

With reference first to Fig. 1 an electric cutting machine is generally denominated 1. Its main parts consist of an elongated motor housing 2 accommodating a not shown electric motor, an angular gear 3, a cutter blade 4 which is driven by the electric motor via the angular gear 3 and a horizontal rotation shaft, a guard 5 for the cutter blade 4, a front handle 6 and a rear unit 10. An electric cable 24 can be connected to a not shown electric power source.

The rear unit 10 consists of a front portion 11 and a rear portion 12, to which the electric cable 24 is connected. The rear portion 12 includes a rear handle 13, and under the rear handle there is a switch lever 14. A hand guard is designated 15. On the left hand side of the rear handle 13 there is provided a blocking button 23. An assembly consisting of the angular gear 3, the motor housing 2, and the rear unit 10, which is connected to one another and arranged after one another in the said order, has a basically elongated, slender shape. The lower side 16 of the motor housing 2 and of the rear unit 10 has an essentially straight shape and is horizontal in a normal working position of the machine. The rear part of the motor housing 2 is designated 20 and a top portion of the rear unit 10 and an adjoining part of the rear part 20 of the motor housing is designated 21.

The upper side 18 of the rear unit has a shape which is convex in the upward direction and forms an upwardly inclined arc relative to the straight, horizontal lower side. The arc shape also extends a short distance in and over the rear part 20 of the motor housing 2 in the region of said top portion 21. The upper side 19 of the front portion of the motor housing 2, on the other hand is essentially straight and parallel with the lower side 16 such that it in the region of the rear part 20 of the motor housing forms a concave upper side 22, which is terminated as it meets the elongation of the arced, convex upper side of the rear unit 10. Due to the described design of the rear unit 10 and the rear part 20 of the motor housing 2, possibilities are established for the achievement of a very suitable design of the switch lever 14 and also of the accommodation of some functional elements in the first place in the rear unit 10, which in combination, promote a design of the rear handle 13 and of the lever arm 14 which is convenient from an ergonomic point of view and thence also an improvement of the handling of the machine from an ergonomic point of view.

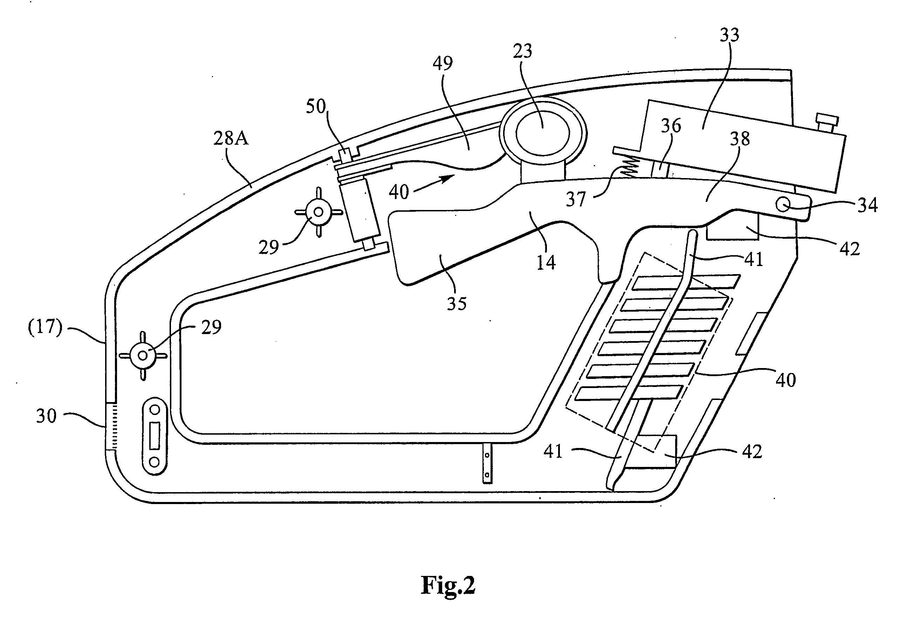

The casing of the rear unit 10 consists of two halves 28A, 28B which contact one another in a central vertical plane in a manner known per se, and which are secured to one another by means of screws. In Fig. 2 there are shown in the left hand halves 28A, screw fastening anchorages 29 for the connection of the halves with one another. In the end piece 17 of the rear unit 10 there is a hole for the electric cable 24. One half of said hole is designated 30 in Fig. 2, and an anchorage for the electric cable is designated 31.

In the top portion 21 there is accommodated an elongated, space consuming switch housing 33, which according to the embodiment accommodates a likewise space consuming electric switch for the motor. The main part of the switch housing 33 is accommodated in the upper part of the front portion 11 of the rear unit 10 and extends a distance into the motor housing 2. The switch lever 14 is a long lever, which can be rotated under the switch housing 33 about a horizontal axis of rotation 34, in the foremost part of the rear unit 10. The rear section of the switch lever 14 defines a control for the electric switch and consequently of the electric motor and is referred to as trigger 35 in this text. The contact member 36 for the electric switch is provided between the switch lever and the lower side of the switch housing 33 and may form an integrated part of the switch lever or of the electric switch or form a separate element. In either case, the contact element 36 will be displaced into the switch housing 33 when the trigger 35 is moved upwards as the trigger level 14 is rotated about the front pivot 34, causing the electric switch to be switched on for starting of the motor. A spring 37 between the lower side of the switch housing 33 and the upper side of the switch lever 14 will be compressed when the trigger 35 is moved upwards, and will return the switch lever 14 and the trigger 35 to their lower position, when the operator releases his hold off the trigger 35 in order to stop the motor, causing the electric currant to be switched of by the electric switch. As an alternative, the spring 37 can be integrated with the contact member 36 or arranged in some other way in or on either the electric switch or the switch lever 14. Because the switch lever 14 is long, a great power is exerted on the return spring 37, which permits the spring to be made powerful without requesting any large power to be applied on the trigger 35 in order that the motor shall be switched on.

Under the switch lever 14 there is provided in the front portion 11 of the rear unit 10 an electronic unit 50, which is responsible for some functions for the drive of the electric motor of the machine, including control of a soft start of the motor when the electric switch is switched on. The electronic unit 50 may be of a kind which is known per se and does not form any part of the invention as such. It will therefore not be disclosed in detail in this text. However, the specific placement of it in the rear unit forms part of the invention according to an aspect of the invention. In the region of placement of the electronic unit 50, which is only symbolically shown, there are two grooves 41 for an electronic card included in the electronic unit 50. Two securing members for connecting the rear unit 10 to the motor housing 2 are designated 42.

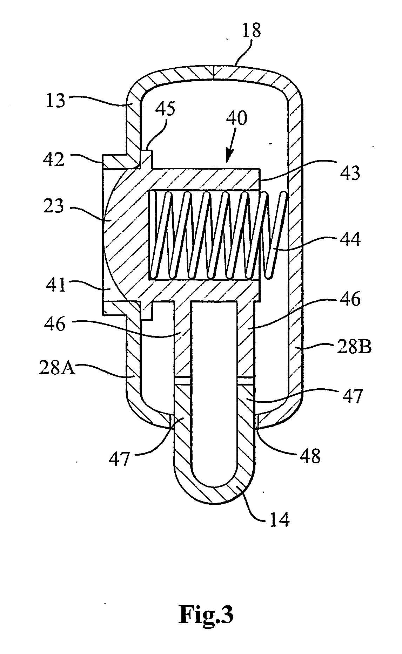

Due to the placement of the switch housing 33 in the front part 1 1 of the rear unit 10, space is made available over the trigger 35 as compared with known electric powered cutting machines. This is employed according to the invention in order to make the rear handle 13 more slender and therefore easier to grip by the operator. Normally the electric switch, also in the case of known high power type machines where the electric switch requires much space, is placed over the trigger 35, which has required designers to make the handle considerably more bulky and uncomfortable to grip. Maintaining the thus achieved, slender shape of the rear handle 13, there are placed elements in the handle, provided to prevent unintentional start of the machine. These elements are shown in Fig. 3 and comprise a unit 40, which may consist of injection moulded plastic material or compression moulded metal. The blocking bottom 23 forms part of said unit 40 and is accessible through a hole 41 in the left hand side of the rear handle 13. A circumferential, axially directed flange 42 around the hole 41 may optionally be provided in order to prevent unintentional operation of the blocking button 23. It should be understood, however, that an unintentional start also can be prevented by suitable dimensioning of the power of the compression spring 44, which is included in the unit Inside of the button 23 the unit 40 is provided with a sleeve shaped portion 43, which accommodates said compression spring 44, which can be compressed between the button of the sleeve portion 43 inside of the button 23 and the inside of the rear handle half 28B. A circumferential flange 45 extends in the radial direction, projecting out from the sleeve portion 43, restricting the outwards directed movement of the unit 40 in the region of the hole 41. Two legs 46 on the sleeve portion 43 extend vertically downwards In the blocking position, these two legs 46 lie in the same plane as the two shanks 47 of the switch lever 14, which shanks extend into the handle 13 through an opening 48 in the lower side of the handle. An elongated arm 49 which is integrated with the unit 40 extends from the sleeve portion 40 rearwise in the handle 13, Fig. 2. The arm 49 is rotatable about a pivot 50 in the rear end of the arm. By rotating the arm 49 about the pivot 50, the shown parts of unit 40 thus can be displaced into the handle 13 therein that the operator presses the button 23 for releasing the blocking unit, and be returned to its blocking position, Fig. 3, by means of the spring 44, respectively. In the blocking position, the two legs 46 on the unit 40 prevent the switch lever 14 from being moved upwards by the operator, since the two legs 46 on the blocking unit 40 form obstacles in the pathway of the two shanks 47 of the switch lever 14. Not until the operator presses the blocking button 23 inwards, such that the legs 46 are displaced relative to the two shanks 47 so far that they no longer adapt a blocking position, can the operator move the switch lever 14 upwards, such that the shanks 47 of the lever arm will adapt a position to the left of the legs 46 on the blocking unit 40, wherein the motor starts. The operator then may leave hold of the button 23, which now is latched and prevented from returning to the position shown in Fig. 3, because the shanks 47 of the switch lever prevent a return of the blocking unit 40 to blocking position. Not until the operator releases his hold on the trigger 35, so that the switch lever 14 returns to its non-latched position by means of the spring 14, the legs 46 of the blocking unit 40 are released, whereafter the blocking unit 40 readapts its blocking position. It is, according to an aspect of the invention, an essential advantage that the blocking button 23 can be placed on the left hand side of the rear handle, easily accessible by the thumb of the right hand of the operator without jeopardising the blocking function of the blocking unit.

It should be understood that the detailed description of the invention does not restrict the claimed patent protection. It should for example be understood that the electric switch may have the shape of a body which is accommodated in a switch housing, but it may also be void of any specific casing. This means that switch housing is synonymous with switch body or with a switch.

It should also be understood that the invention has been developed in order to improve existing electric cutting machines, but that it also can be applied in connection with other portable, electric working machines, such as for example electric saws, including electric chain saws.

## Claims

1. An electric working machine of high power as used for a cutting machine comprising a motor housing (2) accommodating an electric motor, a disc shaped working tool (4) provided to be rotated by the electric motor, a rear unit (10) which is connected to the motor housing and comprises a front portion (11) and a rear portion (12), an electric switch (33) for the motor, mounted in said rear unit, a rear, elongated handle (13), which forms part of said rear unit, and elongated switch lever (14), which is oriented in the longitudinal direction of the rear handle and is provided with a trigger (35), which forms part of the switch lever and is accessible under the lower side of the rear handle,
**characterised in**
- **that** said trigger (35), which is accessible on the lower side of the rear handle, is accessible at the rear of the electric switch,
- **that** the electric switch is mounted at least partly in said front portion (11),
- **that** a front section (38) of the switch lever extends into said front portion of said rear unit for operation of the electric switch,
- **that** the switch lever is mounted pivotally about a front axis of rotation (34) in said front portion,
- **that** said trigger constitutes a rear part of said switch lever, and
- **that** the electric switch is provided to be switched on and off via an operation element (36) against which the switch lever is operateable in a position between said trigger and said front axis of rotation of the switch lever,

2. A working machine according to claim 1, **characterised in that** the electric switch (33) is provided substantially above the front section (28) of the switch lever.

3. A working machine according to claim 1, **characterised in that** said front portion of the rear unit also accommodates said electronic unit (60) for control of the drive of the electric motor, and that the switch (33) and the electronic unit are provided substantially on both sides of the front section of the switch lever with reference to the vertical direction.

4. A working machine according to any of claims 1-3, **characterised in that** a rear section (35) of the switch lever, said rear section forming said trigger, being moveable in a slot (48) in the lower side of the rear handle by rotation about a horizontal axis of rotation.

5. A working machine according to any of claims 1-4, **characterised in that** the electric switch is provided in or has the shape of a switch housing (33), which mainly is provided above the front section (38) of the switch lever, and that the electronic unit (50) is provided under the front section (38) of the switch lever.

6. A working machine according to any of claims 1-5, **characterized in that** the upper side (18) of the rear unit slopes slightly upwards relative to the lower side (16) of the working machine in the horizontal working position of the machine, that a top portion (21) is formed by a front, upper part of the front portion of the rear unit in front of the rear handle and by an adjoining part of the motor housing, and that the electric switch is mounted in said top portion

7. A working machine according to claim 6, **characterized in that** the upper side (19) of a front part of the motor housing (2) is essentially lower than that part of the motor housing which adjoins said rear unit.

8. A working machine according to any of claims 1-7, **characterized in that** the axis of rotation (34) of the switch lever is located at the front end of the switch lever, adjacent to a front end of said rear unit.

9. A working machine according to any of claims 1-8, **characterized in that** an operation element (36) of the electric switch is provided between the front section of the switch lever and the electric switch in a position at the rear of the axis of rotation of the switch lever for switching the electric switch on and off by the upwards and downwards directed movements, respectively, of the switch lever.

10. A working machine according to any of claims 1-9, **characterized in that** the electric switch is provided in or forms an integrated part of an elongated switch housing (33)

11. A working machine according to any of claims 1-10, **characterized in that** a blocking device is provided against unintentional starting of the motor, said blocking device, when it is in a position uninfluenced by the operator, which is an active blocking position, prevents the switch lever from being moved upwards from its inactive switch off-position, while the blocking device, when it is in a release position, which the blocking device can adopt by action by the operator, releases the switch lever, permitting the switch lever to be moved upwards by the operator for switching on the electric switch.

12. A working machine according to claim 11, **characterized in that** the blocking device includes a blocking unit in the rear handle above the rear section of the switch lever, said blocking unit being provided to be inactivated by lateral displacement by the operator from said active blocking position to said inactive release position by means of a button (23) provided in a lateral side of the rear handle, that at least a first spring member (37) is provided to return the switch lever by spring power from its switch-on position to its active switch-off position, and that at least a second spring member (44) is provided to return the blocking unit by spring power from the release position to the active blocking position but not before the switch lever has been returned to its inactive off position by means of said first spring member.

13. A working machine according to any of claims 1-12, **characterised in that** the rear unit (10) is connected directly to the motor housing (2).

## Patentansprüche

1. Elektrische Arbeitsmaschine mit großer Leistung, wie sie für eine Trennmaschine verwendet wird, umfassend ein Motorgehäuse (2) zur Aufnahme eines Elektromotors, ein scheibenförmiges Arbeitswerkzeug (4), das so angebracht ist, dass es von dem Elektromotor gedreht werden kann, eine hintere Einheit (10), die mit dem Motorgehäuse verbunden ist und einen vorderen Teil (11) und einen hinteren Teil (12), einen elektrischen Schalter (33) für den Motor, montiert in der hinteren Einheit, einen hinteren, länglichen Griff (13), der Teil der hinteren Einheit ist, sowie einen länglichen Schalthebel (14), der in der Längsrichtung des hinteren Griffs ausgerichtet und mit einem Auslöser (35) ausgestattet ist, der einen Teil des Schalthebels bildet und unterhalb der Unterseite des hinteren Griffs erreichbar ist,
**gekennzeichnet dadurch, dass**
- der besagte Auslöser (35), der an der Unterseite des hinteren Griffs erreichbar ist, an der hinteren Seite des elektrischen Schalters erreichbar ist,
- der elektrische Schalter zumindest teilweise im besagten vorderen Teil (11) montiert ist,
- ein vorderer Abschnitt (38) des Schalthebels zur Betätigung des elektrischen Schalters in den besagten vorderen Teil der besagten hinteren Einheit hinein verläuft,
- der Schalthebel schwenkbar über einer vorderen Drehachse (34) im besagten vorderen Teil montiert ist,
- der besagte Auslöser einen hinteren Teil des Schalthebels bildet, und
- der elektrische Schalter so ausgeführt ist, dass er über ein Betätigungselement (36), gegen das der Schalthebel in einer Position zwischen dem besagten Auslöser und der besagten vorderen Drehachse des Schalthebels zu betätigen ist, ein- und ausgeschaltet werden kann.

2. Arbeitsmaschine nach Anspruch 1, **gekennzeichnet dadurch, dass** der elektrische Schalter (33) im Wesentlichen über dem vorderen Abschnitt (28) des Schalthebels angebracht ist.

3. Arbeitsmaschine nach Anspruch 1, **gekennzeichnet dadurch, dass** im vorderen Teil der hinteren Einheit auch die besagte Elektronikeinheit (60) zur Steuerung des Antriebs des Elektromotors untergebracht ist und dass der Schalter (33) und die Elektronikeinheit in Bezug auf die vertikale Richtung im Wesentlichen an beiden Seiten des vorderen Abschnitts des Schalthebels angebracht sind.

4. Arbeitsmaschine nach einem der Ansprüche 1 bis 3, **gekennzeichnet dadurch, dass** ein hinterer Abschnitt (35) des Schalthebels, der den Auslöser bildet, in einer Nut (48) in der Unterseite des hinteren Griffs durch eine Drehung über einer horizontalen Drehachse gedreht werden kann.

5. Arbeitsmaschine nach einem der Ansprüche 1 bis 4, **gekennzeichnet dadurch, dass** der elektrische Schalter in einem Schaltgehäuse (33) montiert ist oder die Form eines Schaltgehäuses hat, das hauptsächlich über dem vorderen Abschnitt (38) des Schalthebels angebracht ist, und dass die Elektronikeinheit (50) unter dem vorderen Abschnitt (38) des Schalthebels ausgeführt ist.

6. Arbeitsmaschine nach einem der Ansprüche 1 bis 5, **gekennzeichnet dadurch, dass** die obere Seite (18) der hinteren Einheit relativ zur unteren Seite (16) der Arbeitsmaschine in ihrer horizontalen Arbeitsposition leicht nach oben geneigt ist, dass ein oberer Teil (21) durch einen vorderen, oberen Teil des vorderen Teils der hinteren Einheit vor dem hinteren Griff und durch einen angrenzenden Teil des Motorgehäuses gebildet wird, und dass der elektrische Schalter in dem oberen Teil montiert ist.

7. Arbeitsmaschine nach Anspruch 6, **gekennzeichnet dadurch, dass** die obere Seite (19) eines vorderen Teils des Motorgehäuses (2) wesentlich niedriger als jener Teil des Motorgehäuses ist, der an die hintere Einheit angrenzt.

8. Arbeitsmaschine nach einem der Ansprüche 1 bis 7, **gekennzeichnet dadurch, dass** sich die Drehachse (34) des Schalthebels am vorderen Ende des Schalthebels befindet, angrenzend an ein vorderes Ende der hinteren Einheit.

9. Arbeitsmaschine nach einem der Ansprüche 1 bis 8, **gekennzeichnet dadurch, dass** ein Betätigungselement (36) des elektrischen Schalters zwischen dem vorderen Abschnitt des Schalthebels und dem elektrischen Schalter in einer Position an der Rückseite der Drehachse des Schalthebels montiert ist, so dass der elektrische Schalter durch auf- bzw. abwärts gerichtete Bewegungen des Schalthebels ein- bzw. ausgeschaltet werden kann.

10. Arbeitsmaschine nach einem der Ansprüche 1 bis 9, **gekennzeichnet dadurch, dass** der elektrische Schalter in einem länglichen Schaltergehäuse (33) untergebracht oder integraler Bestandteil eines solchen Schaltergehäuses ist.

11. Arbeitsmaschine nach einem der Ansprüche 1 bis 10, **gekennzeichnet dadurch, dass** eine Blockiervorrichtung das unbeabsichtigte Starten des Motors verhindern soll, wobei die besagte Blockiervorrichtung in einer vom Bediener unbeeinflussten Position, bei der es sich um eine aktive Blockierposition handelt, eine Aufwärtsbewegung des Schalthebels aus der inaktiven Aus-Position verhindert, während die Blockiervorrichtung in ihrer Freigabeposition, in die sie durch Handeln des Bedieners gelangen kann, eine Aufwärtsbewegung des Schalthebels durch den Bediener gestattet, so dass der elektrische Schalter eingeschaltet werden kann.

12. Arbeitsmaschine nach Anspruch 11, **gekennzeichnet dadurch, dass** die Blockiervorrichtung eine Blockiereinheit im hinteren Griff über dem hinteren Abschnitt des Schalthebels umfasst, wobei die Blockiereinheit durch eine seitliche Verschiebung durch den Bediener aus der aktiven Blockierposition in die inaktive Freigabeposition verschoben werden kann, wozu eine Taste (23) dient, die sich in einer Seite des hinteren Griffs befindet, dass mindestens ein erstes Federelement (37) zur Rückholung des Schalthebels aus seiner eingeschalteten Position in die aktive Aus-Position durch Federkraft dient, und dass mindestens ein zweites Federelement (44) zur Rückholung der Blockiereinheit mittels Federkraft aus der Freigabeposition in die aktive Blockierposition dient, jedoch nicht vor der von dem ersten Federelement veranlassten Rückkehr des Schalthebels in seine inaktive Aus-Position.

13. Arbeitsmaschine nach einem der Ansprüche 1 bis 12, **gekennzeichnet dadurch, dass** die hintere Einheit (10) direkt mit dem Motorgehäuse (2) verbunden ist.

## Revendications

1. Machine de travail électrique d'une puissance élevée telle qu'utilisée pour une machine de coupe comprenant un carter de moteur (2) logeant un moteur électrique, un outil de travail en forme de disque (4) prévu pour être entraîné en rotation par le moteur électrique, une unité arrière (10) qui est reliée au carter du moteur et comprend une partie avant (11) et une partie arrière (12), un commutateur électrique (33) pour le moteur, monté dans ladite unité arrière, une poignée arrière allongée (13) qui fait partie de ladite unité arrière, et un levier de commutateur allongé (14) qui est orienté dans la direction longitudinale de la poignée arrière et est doté d'une gâchette (35) qui fait partie du levier de commutateur et est accessible sous le côté inférieur de la poignée arrière,
**caractérisée en ce que**
- ladite gâchette (35) qui est accessible sur le côté inférieur de la poignée arrière, est accessible à l'arrière du commutateur électrique,
- le commutateur électrique est monté au moins partiellement dans ladite partie avant (11),
- une section avant (38) du levier de commutateur s'étend dans ladite partie avant de ladite unité arrière pour un fonctionnement du commutateur électrique,
- le levier de commutateur est monté de façon à pivoter autour d'un axe de rotation avant (34) dans ladite partie avant,
- ladite gâchette constitue une partie arrière dudit levier de commutateur, et
- le commutateur électrique est prévu pour être fermé et ouvert par l'intermédiaire d'un élément de fonctionnement (36) contre lequel le levier de commutateur peut fonctionner dans une position entre ladite gâchette et ledit axe de rotation avant du levier de commutateur.

2. Machine de travail selon la revendication 1, **caractérisée en ce que** le commutateur électrique (33) est prévu sensiblement au-dessus de la section avant (28) du levier de commutateur.

3. Machine de travail selon la revendication 1, **caractérisée en ce que** ladite partie avant de l'unité arrière reçoit également ladite unité électronique (60) pour une commande de l'entraînement du moteur électrique et **en ce que** le commutateur (33) et l'unité électronique sont prévus globalement des deux côtés de la section avant du levier de commutateur en référence à la direction verticale.

4. Machine de travail selon l'une quelconque des revendications 1 à 3, **caractérisée en ce qu'**une section arrière (35) du levier de commutateur, ladite section arrière formant ladite gâchette, peut être déplacée dans une fente (48) dans le côté inférieure de la poignée arrière par une rotation autour d'un axe de rotation horizontal.

5. Machine de travail selon l'une quelconque des revendications 1 à 4, **caractérisée en ce que** le commutateur électrique est prévu dans un logement de commutateur (33) ou se présente sous la forme de celui-ci, lequel est principalement prévu au-dessus de la section avant (38) du levier de commutateur, et **en ce que** l'unité électronique (50) est prévue sous la section avant (38) du levier de commutateur.

6. Machine de travail selon l'une quelconque des revendications 1 à 5, **caractérisée en ce que** le côté supérieur (18) de l'unité arrière s'incline légèrement vers le haut par rapport au côté inférieur (16) de la machine de travail dans la position de travail horizontale de la machine, **en ce qu'**une partie supérieure (21) est formée par une partie avant supérieure de la partie avant de l'unité arrière à l'avant de la poignée arrière et par une partie adjacente du carter de moteur, et **en ce que** le commutateur électrique est installé dans ladite partie supérieure.

7. Machine de travail selon la revendication 6, **caractérisée en ce que** le côté supérieur (19) d'une partie avant du carter de moteur (2) est sensiblement plus bas que la partie du carter de moteur qui est reliée à ladite unité arrière.

8. Machine de travail selon l'une quelconque des revendications 1 à 7, **caractérisée en ce que** l'axe de rotation (34) du levier de commutateur est situé à l'extrémité avant du levier de commutateur, de façon adjacente à une extrémité avant de ladite unité arrière.

9. Machine de travail selon l'une quelconque des revendications 1 à 8, **caractérisée en ce qu'**un élément de fonctionnement (36) du commutateur électrique est prévu entre la section avant du levier de commutateur et le commutateur électrique dans une position à l'arrière de l'axe de rotation du levier de commutateur pour fermer et ouvrir le commutateur électrique par les mouvements orientés vers le haut et vers le bas, respectivement, du levier de commutateur.

10. Machine de travail selon l'une quelconque des revendications 1 à 9, **caractérisée en ce que** le commutateur électrique est prévu dans un logement de commutateur allongé (33) ou fait partie intégrante de celui-ci.

11. Machine de travail selon l'une quelconque des revendications 1 à 10, **caractérisée en ce qu'**un dispositif de blocage est prévu contre un démarrage involontaire du moteur, ledit dispositif de blocage, lorsqu'il se trouve dans une position indépendante de l'utilisateur, qui est une position de blocage active, empêche le levier de commutateur d'être déplacé vers le haut depuis sa position ouverte inactive, alors que le dispositif de blocage, lorsqu'il se trouve dans une position relâchée, que le dispositif de blocage peut adopter par l'action de l'utilisateur, relâche le levier de commutateur, en permettant au levier de commutateur d'être déplacé vers le haut par l'utilisateur pour une fermeture du commutateur électrique.

12. Machine de travail selon la revendication 11, **caractérisée en ce que** le dispositif de blocage comprend une unité de blocage dans la poignée arrière au-dessus de la section arrière du levier de commutateur, ladite unité de blocage étant prévue pour être inactivée par un déplacement latéral effectué par l'utilisateur de ladite position de blocage active à ladite position de relâchement inactive au moyen d'un bouton (23) prévu dans un côté latéral de la poignée arrière, **en ce qu'**au moins un premier élément de ressort (37) est prévu pour ramener le levier de commutateur par un effet de ressort de sa position de fermeture à sa position d'ouverture active, et **en ce qu'**au moins un second élément de ressort (44) est prévu pour ramener l'unité de blocage par un effet de ressort de la position de relâchement à la position de blocage active, mais pas avant que le levier de commutateur ait été ramené à sa position d'ouverture inactive au moyen dudit premier élément de ressort.

13. Machine de travail selon l'une quelconque des revendications 1 à 12, **caractérisée en ce que** l'unité arrière (10) est reliée directement au carter du moteur (2).
